# EUROPÄISCHE PATENTSCHRIFT

(11) **EP 1 273 376 B1**
(45) Veröffentlichungstag und Bekanntmachung des Hinweises auf die Patenterteilung: **29.09.2004**
(21) Anmeldenummer: 02450144.7
(22) Anmeldetag: 26.06.2002
(51) Int. Cl.: B23D 65/00, B23D 61/02

(54) **Verfahren zur Herstellung eines Kreissägeblattes**
Method for making a circular saw blade
Procédé pour la fabrication d'une scie circulaire

(30) Priorität: 03.07.2001 AT 10342001
(43) Veröffentlichungstag der Anmeldung: 08.01.2003
(73) Patentinhaber: Böhler Miller Messer und Sägen GmbH, 3333 Böhlerwerk (AT)
(72) Erfinder: Frey, Lambert, 3131 Getzersdorf 123 (AT)
(74) Vertreter: Wildhack, Helmut, Dipl.-Ing. Dr.

(56) Entgegenhaltungen:
- GB-A- 1 312 755
- US-A- 3 812 755

## Beschreibung

Die Erfindung betrifft ein Verfahren zur Herstellung eines Kreissägeblattes durch Verkleben von mindestens zwei deckungsgleichen Metallblättern aus einer Eisenbasislegierung, wobei das Sägeblatt im Bereich des Außenumfanges Schlitze und/oder Zähne aufweist, auf welchen Zwischenschlitz-Umfangsflächen oder Zähnen mittels metallischer Verbindung Schneidsegmente oder Schneidplättchen aufgebracht werden.

Einstückige Kreissägeblätter werden während eines Betriebes der Säge mit hoher Leistung in Schwingungen versetzt und verursachen dadurch oftmals eine große Lärmbelästigung.
Es ist bekannt, eine deutliche Verringerung des abgestrahlten Luftschallpegels durch einen sandwichartigen Aufbau des Stammblattes zu erreichen. Dabei werden mindestens zwei runde Seitenplatten miteinander zumindest stellenweise unter Bildung eines Stammblattes verbunden und auf dieses umfänglich Schneidplättchen oder Schneidsegmente angeordnet. Eine Verbindung der zwei Seitenplatten gegebenenfalls über eine Mittelplatte kann metallisch, durch Löten sowie Punktschweißen oder durch Kleben erfolgen.

Bei einem Verbinden durch Kleben werden zwei kongruente metallische Blätter unter Zwischenlage einer dünnen Klebstoffschicht aufeinander gebracht, wonach der Klebstoff, insbesondere thermisch, aushärten gelassen wird. Dabei kann es, wie die DE44 05 475 offenbart, vorteilhaft sein, wenn ein Verkleben der Teile nur im Radialbereich mit einem Abstand vom Umfang des Sägeblattes erfolgt.

Die trotz einer Sandwichbauweise gedämpft auftretenden Schwingungen des Sägeblattes und die wechselnden oder schwellenden mechanischen Belastungen in einem Hochleistungsbetrieb können ein zumindest teilweises Desintegrieren des Seitenblattes bewirken. Untersuchungen haben gezeigt, daß ausgehend von einem oft kleinflächigen Fehler vielfach im Bereich des halben Radius des Sägeblattes Ablösungen des Klebstoffes von einem Blatt entstehen, welche sich muschelförmig vergrößern und letztlich zum Auswandern des Flugkreises der Schneidsegmente oder Schneidplättchen in axialer Richtung im Sägebetrieb und/oder zum Abbrechen derselben vom Stammblatt führen. Somit kann es zu einer vergleichsweise unterschiedlichen Haltbarkeit im Betrieb der einzelnen Sägeblätter kommen, was besonders nachteilig wirksam ist, wenn mehrere Sägeblätter auf einer Welle montiert schnitterzeugend eingesetzt werden.

Der Erfindung liegt nun die Aufgabe zugrunde, den Mangel einer unterschiedlichen Haltbarkeit bzw. eine Desintegration der Seitenblätter zu beseitigen und ein geklebtes Sägeblatt zu schaffen, welches verbesserte Gebrauchseigenschaften aufweist. Insbesondere ist die Erfindung darauf gerichtet, ein Verfahren zum rißinitiationsfreiem Verkleben von zumindest zwei Metallblättern unter Bildung eines Kreissägestammblattes mit verbesserter Rundlaufgenauigkeit anzugeben.

Diese Aufgabe wird bei einem Verfahren der eingangs genannten Art dadurch gelöst, daß aus thermisch vergütetem, flächigem , dünnem Vormaterial mindestens zwei Metallblätter in Kreissägenform entnommen und rundum im Bereich des halben Radius durch sogenanntes Rollieren teilweise plastisch verformt werden, sodann die miteinander zu verklebenden Seitenflächen mit einer Rauhigkeit versehen werden, deren Werte nach EN ISO 4287, EN ISO 4288 ( DIN 4762) eine maximale Profilhöhe von R_{z} (R_{y}) = 3,0 bis 7,0 µm und einen arithmetischen Mittenrauhwert Rₐ = 0,30 bis 0,75 µm betragen, nachfolgend die derartig bearbeiteten Seitenflächen der kreissägenförmigen Metallblätter mit Kleber beschichtet und unter Druck einem zweistufigen thermischen Aushärtevorgang unterworfen werden, wonach ein Bearbeiten der seitlichen Außenoberfläche des verklebten Kreissäge- oder Stammblattes, welches eine Oberflächenrauhigkeit mit einer maximalen Profilhöhe R_{z} von 5 bis 10 µm ergibt, und ein metallisches Verbinden der umfänglichen Zwischenschlitzflächen oder Zähne mit Schneidplättchen oder Diamantsegmenten erfolgen.

Die mit dem erfindungsgemäßen Verfahren erreichten Vorteile sind im wesentlichen darin zu sehen, daß einerseits der Flugkreis der schnitterzeugenden mit dem Stammblatt verbundenen Schneidelemente auch bei hohen mechanischen und thermischen Belastungen der Kreissäge stabilisiert ist, daß also wirtschaftlich dünne Schnitte mit hoher Leistung erzielt werden können, andererseits auch die Klebeverbindung keinerlei Rißinitiation für sogenannte muschelförmige Desintegrationsflächen aufweist, somit eine dauerfeste Verbindung der Seitenblätter darstellt.

Zur Stabilisierung des Flugkreises der schnitterzeugenden Elemente ist es wichtig, auf die Klebeverbindung abgestimmt, beide Metallblätter im Bereich des halben Radius teilweise plastisch zu verformen und derart Zuspannungen im Außenbereich des Stammblattes darzustellen. Um weiters eine hohe Dauerfestigkeit der Verklebung der beiden Seitenblätter mit einem aushärtbaren Klebstoff, zum Beispiel einem Harnstoffmethacrylat oder dergleichen, mit Sicherheit zu erreichen, ist es erfindungsgemäß erforderlich, daß eine Rauhigkeit der zu verklebenden Oberfläche der Seitenblätter mit einer maximalen Profilhöhe R_{z}(R_{y}) zwischen 3,0 und 7,0 µm und einen arithmetischen Mittelrauhwert Rₐ zwischen 0,30 und 0,75 µm eingestellt wird. Bei größeren maximalen Profilhöhen als 7,0 µm treten insbesondere im Bereich des halben Radius des Stammblattes sprunghaft Rißinitiationsstellen zwischen Metall und Klebstoff auf. Die Ursache dafür, die noch nicht restlos geklärt ist, dürfte in zu tiefen, gegebenenfalls klebstofffreien Profiltälern bei einer größeren Höhendifferenz R_{z} des Profils von 7,0 µm liegen. Erfolgt jedoch eine Bearbeitung der zu verklebenden Oberflächen derart, daß eine Rauhigkeit mit einer mximalen Profilhöhe von geringer als 3 µm erstellt wird, so kann die Klebstoffhaftung an den glatten Flächen geringer sein als die auftretenden Schubspannungen erfordern, so daß die erfindungsgemäße Profilhöhe R_{z} zwischen 3,0 µm und 7,0 µm liegt.

Es hat sich gezeigt, daß nicht nur die Profilhöhe R_{z} der Rauhigkeit wesentlich für die Haftung der Klebeverbindung ist, sondern daß auch der arithmetische Mittelwert der absoluten Werte der Profilabweichungen eine große Bedeutung für die Festigkeit der Verbindung der beiden Seitenblätter besitzt. Erfolgt die Bearbeitung der Klebeflächen der Seitenblätter derart, daß der Mittelrauhwert Rₐ von 0,75 µm überschritten wird, so wird eine Bildung von Rißinitiationsstellen angeregt. Sind hingegen die Werte für die Mittenrauhigkeit Rₐ der Klebeflächen der Seitenblätter geringer als 0,3 µm, so kann die Haftfestigkeit so gering werden, daß eine Desintegration des Stammblattes erfolgt.

Um bei dünnen Sägeschnitten die Spanhaftung und die Spanklebeneigung an den äußeren Seitenflächen des Stammblattes zu minimieren und geringste Seitenreibkräfte bei einer Schnittbildung sicherzustellen, ist eine Bearbeitung der Außenflächen vorzusehen, die eine Rauhigkeit mit einer erfindungsgemäßen maximalen Profilhöhe R_{z} (R_{y}) im Bereich zwischen 5 µm und 10 µm erbringt. Größere Profilhöhen in der Oberfläche als 10 µm können einen Einzug von gröberen Spänen in den Sägespalt bewirken, wodurch ein Klemmen des Sägeblattes und/oder eine erhöhte Reibwirkung entstehen kann, wobei Profilhöhen R_{z} unter 5µm ein Kleben von Spanfeinmaterial begünstigt, was ebenfalls die Tendenz zu einem Klemmen des Sägeblattes fördert. Um nun derartige erhöhte Reibwirkungen, die oftmals eine unzulässige Erwärmung des Stammblattes erbringen, weitgehend auszuschalten, ist gemäß der Erfindung eine Rauhigkeit der äußeren Seitenflächen des Sägeblattes mit einer Profilhöhe R_{z} im Bereich zwischen 5 µm und 10 µm vorgesehen.

Eine vermehrt sichere Verbindung mit hohen mechanischen Festigkeitswerten läßt sich dadurch erzielen, daß auf die zu verklebenden bearbeiteten Seitenflächen der Metallblätter mit einem thermisch aushärtbaren Klebstoff in einer Dicke von 0,03 bis 0,06 mm, gemessen von der Mittellinie (1) des Rauhigkeitsprofiles, beschichtet, deckungsgleich aufeinander angeordnet und in einer ersten Aushärtestufe bei einer Temperatur von 50 ° C bis 70 °C und einem Druck von 1 bis 3 kg/cm² während einer Zeit von 10 bis 16 Minuten vorausgehärtet auf Raumtemperatur gebracht sowie gegebenenfalls gerichtet werden, wonach bei einer Temperatur von 140 bis 160 °C eine Vollaushärtung des Klebestoffes erfolgt.

Besonders wirtschaftlich und mit hoher Güte sind die erfindungsgemäßen Rauhigkeitswerte erreichbar, wenn die Bearbeitung der Seitenflächen mittels Bürstpolierens oder Rundpolierens erfolgt.

Mit Vorteil können hochwertige Grundteile des Stammblattes kostengünstig bereitgestellt werden, wenn die Entnahme der Metallblätter aus dem Vormaterial durch thermisches Schmelzschneiden, zum Beispiel Laserschneiden, erfolgt und die Metallblätter vor der Weiterverarbeitung einer Anlaßbehandlung, zum Beispiel in einem Temperaturbereich zwischen 380 °C und 480° C unterworfen werden. Dadurch kann auch in den schnittbenachbarten Zonen erhöhte Materialzähigkeit eingestellt werden.

Eine höchst haltbare metallische Verbindung der Schneidteile ist erreichbar, wenn das Kreissägeblatt bzw. Stammblatt aus einer Legierung in Gew.-% von

| | | |
|---|---|---|
| 0,6 | bis | 0,9 C |
| 0,15 | bis | 0,7 Si |
| | bis | 1,0 Mn |
| | max | 0,03 P |
| | max | 0,03 S |
| 0,20 | bis | 0,60 Cr |

Rest Eisen und Begleitelemente gebildet wird und daß die metallische Verbindung der Schneidplättchen oder Diamantsegmente mit dem Stammblatt durch Löten erfolgt.

Alternativ, insbesondere für ausgewählt zu sägende Werkstoffe kann eine günstige Sägenausbildung mit bevorzugten Gebrauchseigenschaften derselben erreicht werden, wenn das Kreissägeblatt bzw. Stammblatt aus einer Legierung in Gew.-%

| | | |
|---|---|---|
| 0,18 | bis | 0,35 C |
| | bis | 0,50 Si |
| | bis | 1,40 Mn |
| | max | 0,03 P |
| | max | 0,03 S |
| 0,30 | bis | 1,55 Cr |
| | bis | 0,40 Mo |

Rest Eisen und Begleitelemente gebildet wird und daß die metallische Verbindung der Schneipblättchen oder Diamantsegmente mit dem Stammblatt durch Schweißung, insbesondere Laserschweißung, erfolgt.

Zur insbesondere unmittelbaren und prinzipiellen Veranschaulichung einiger Erfindungsmerkmale sind zwei den Normblättern entnommene Rauhigkeitsdarstellungen im folgenden wiedergegeben.
Es zeigt
Fig. 1 eine Darstellung der Oberflächenrauhigkeit am Querprofil
Fig. 2 eine Darstellung eines Querprofils mit arithmetischen Mittenrauhwert

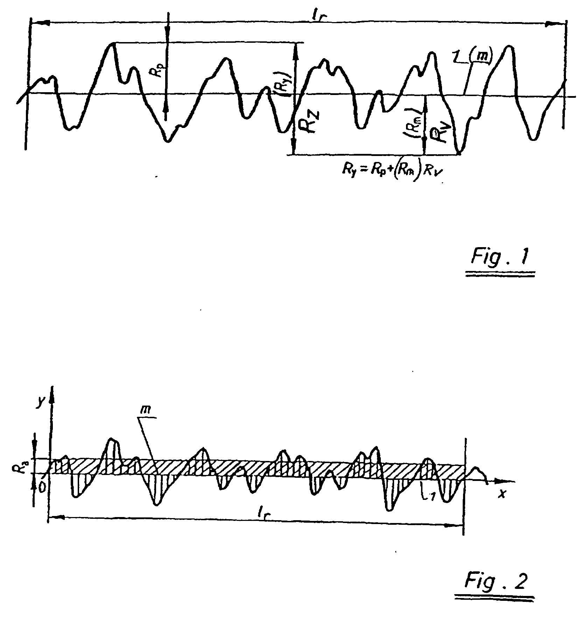

Fig. 1 zeigt ein Querschnittsprofil im Bereich der Oberfläche über die Länge I eines Gegenstandes gemäß EN ISO 4287 ( DIN 4762). Die größte Höhe des Profils bzw. die maximale Profilhöhe R_{z} ( R_{y}) ergibt sich aus der Summe der Höhe der größten Profilspitze Rₚ und der Tiefe des größten Profiltales Rᵥ gegenüber der Mittellinie (1). In Fig. 2 ist prinzipiell der arithmetische Mittelwert der Profilordinaten bzw. der arithmetische Mittelwert Rₐ dargestellt. Rₐ stellt den arithmetischen Mittelwert der absoluten Werte der Profilabweichungen innerhalb der Bezugslänge Iᵣ dar.

## Patentansprüche

1. Verfahren zur Herstellung eines Kreissägeblattes durch Verkleben von mindestens zwei deckungsgleichen Metallblättern aus einer Eisenbasislegierung, wobei das Sägeblatt im Bereich des Außenumfanges Schlitze und/oder Zähne aufweist, auf welchen Zwischenschlitz- Umfangsflächen oder Zähnen mittels metallischer Verbindung Schneidsegmente oder Schneidplättchen aufgebracht werden, **dadurch gekennzeichnet, daß** aus thermisch vergütetem, flächigem, dünnem Vormaterial einer Eisenbasislegierung mindestens zwei Metallblätter in Kreissägenform entnommen und jeweils rundum im Bereich des halben Radius durch sogenanntes Rollieren teilweise plastisch verformt werden, sodann die miteinander zu verklebenden Seitenflächen mit einer Rauhigkeit versehen werden, deren Werte nach EN ISO 4287, EN ISO 4288 ( DIN 4762) eine maximale Profilhöhe von R_{z} (R_{y}) = 3,0 bis 7,0 µm und einen arithmetischen Mittenrauhwert Rₐ = 0,30 bis 0,75 µm betragen, nachfolgend die derartig bearbeiteten Seitenflächen der kreissägenförmigen Metallblätter mit Kleber beschichte werden und unter Druck dieser einem zweistufigen thermischen Aushärtevorgang unterworfen wird, wonach ein Bearbeiten der seitlichen Außenoberfläche des verklebten Kreissäge - oder Stammblattes, welches eine Oberflächenrauhigkeit mit einer maximale Profilhöhe R_{z} von 5 bis 10 µm ergibt und ein metallisches Verbinden der umfänglichen Zwischenschlitzflächen oder Zähne mit Schneidplättchen oder Diamantsegmenten erfolgen.

2. Verfahren nach Anspruch **1, dadurch gekennzeichnet, daß** die zu verklebenden bearbeiteten Seitenflächen der Metallblätter mit einem thermisch aushärtbaren Klebstoff in einer Dicke von 0,03 bis 0,06 mm, gemessen von der Mittellinie ( m) des Rauhigkeitsprofiles, beschichtet, deckungsgleich aufeinander angeordnet und in einer ersten Aushärtestufe bei einer Temperatur von 50 °C bis 70° C und einem Druck von 1 bis 3 kg/cm² während einer Zeit von 10 bis 16 Minuten vorausgehärtet, auf Raumtemperatur gebracht sowie gegebenenfalls gerichtet werden, wonach bei einer Temperatur von 140 bis 160 °C eine Vollaushärtung des Klebestoffes erfolgt.

3. Verfahren nach Anspruch 1 oder 2, **dadurch gekennzeichnet, daß** die Bearbeitung der Seitenflächen zur Einstellung der Rauhigkeit mittels Bürstpolierens oder Rundpolierens erfolgt.

4. Verfahren nach einem der Ansprüche 1 bis 3, **dadurch gekennzeichnet, daß** die Entnahme der Metallblätter aus dem Vormaterial durch thermisches Schneiden, zum Beispiel Laserschneiden, erfolgt und daß die Metallblätter vor der Weiterverarbeitung eine Anlaßbehandlung, zum Beispiel in einem Temperaturbereich zwischen 380° C und 480°C, unterworfen werden.

5. Verfahren nach einem der Ansprüche 1 bis 4, **dadurch gekennzeichnet, daß** das Kreissägeblatt bzw. Stammblatt aus einer Legierung in Gew.-%
| | | |
|---|---|---|
| 0,6 | bis | 0,9 C |
| 0,15 | bis | 0,7 Si |
| | bis | 1,0 Mn |
| | max | 0,03 P |
| | max | 0,03 S |
| 0,20 | bis | 0,60 Cr |
Rest Eisen und Begleitelemente gebildet wird und daß die metallische Verbindung der Schneidplättchen oder Diamantsegmente mit dem Stammblatt durch Löten erfolgt.

6. Verfahren nach einem der Ansprüche 1 bis 4, **dadurch gekennzeichnet, daß** das Kreissägeblatt bzw. Stammblatt aus einer Legierung in Gew.-%
| | | |
|---|---|---|
| 0,18 | bis | 0,35 C |
| | bis | 0,50 Si |
| | bis | 1,40 Mn |
| | max | 0,03 P |
| | max | 0,03 S |
| 0,30 | bis | 1,55 Cr |
| | bis | 0,40 Mo |
Rest Eisen und Begleitelemente gebildet wird und daß die metallische Verbindung der Schneidplättchen oder Diamantsegmente mit dem Stammblatt durch Schweißung, insbesondere Laserschweißung, erfolgt.

## Claims

1. Process for producing a circular saw blade by gluing together at least two congruent blades made of an iron-based-alloy, the saw blade having slots and/or teeth on its outer circumference, with cutting segments or cutting tips being attached or deposited onto the circumferal inter-slot faces or teeth by means of metallic bonding, **characterized in that** at least two metal blades in circular saw-shape are taken out of a thermally lumenized or annealed, tabular sheet-prematerial of an iron-alloy and are each partially shaped in a fictile way all around in the area of half of the radius by so called rolling, that subsequently the side faces glued together are furnished with a surface roughness with a maximum profile height of R_{z}(R_{y}) = 3,0 to 7,0 µm and an arithmetic average (AA) height Rₐ = 0,3 to 0,75 µm, according to EN ISO 4287, EN ISO 4288 (DIN 4762), that subsequently the so treated side faces of the circular saw shaped metal blades are furnished with glue and that the glue is submitted to a two step thermal curing process under pressure, followed by a treatment of the outer side face of the glued saw blade resulting in a surface roughness with a maximum profile height R_{z} of 5 to 19 µm and by a metallic bonding of the circumferal inter-slot faces or teeth with cutting tips or diamond segments.

2. Process according to claim 1, **characterized in that** the treated side faces of the metal blades to be glued are furnished with a thermally curing glue with a thickness of 0,03 to 0,06 mm, measured from the center line (m) of the surface roughness profile, in a congruent way and are procured in a first curing stage at a temperature of 50°C to 70°C and a pressure of 1 to 3 kg/cm³ for a time of 10 to 16 minutes, then brought to room temperature and are straightened if necessary, followed by a complete hardening of the glue at 140°C to 160°C.

3. Process according to claim 1 or 2, **characterized in that** the treatment of the side faces to adjust the roughness is done via brush- or circular polishing.

4. Process according to one of the claims 1 to 3, **characterized in that** the process of taking out the metal blades of the prematerial is done by thermal cutting, e.g. lasercutting, and that before further processing the metal blades are submitted to a tempering treatment, e.g. at a temperature between 380°C and 480°C.

5. Process according to one of the claims 1 to 4, **characterized in that** the circular saw blade is made from an alloy in weight% of
| | | |
|---|---|---|
| 0,6 | to | 0,9 C |
| 0,15 | to | 0,7 Si |
| | to | 1,0 Mn |
| | max | 0,03 P |
| | max | 0,03 S |
| 0,20 | to | 0,60 Cr |
rest iron and companion elements and that the metallic bond of the cutting tips or diamond segments with the saw blade is done by soldering.

6. Process according to one of the claims 1 to 4, **characterized in that** the circular saw blade is made from an alloy in weight% of
| | | |
|---|---|---|
| 0,18 | to | 0,35 C |
| | to | 0,50 Si |
| | to | 1,40 Mn |
| | max | 0,03 P |
| | max | 0,03 S |
| 0,30 | to | 1,55 Cr |
| | to | 0,40 Mo |
rest iron and companion elements and that the metallic bond of the cutting tips or diamond segments with the saw blade is done by welding, especially laser welding.

## Revendications

1. Procédé pour la fabrication d'une lame de scie circulaire par collage d'au moins deux feuilles de métal coïncidentes en un alliage à base de fer, moyennant quoi la lame de scie présente dans la zone de la circonférence extérieure des fentes et/ou des dents sur des surfaces circonférentielles, entre les fentes ou sur les dents desquelles on applique au moyen d'une liaison métallique des segments de coupe ou des plaquettes de coupe, **caractérisé en ce qu'**au moins deux feuilles métalliques de la forme de la scie circulaire sont prélevées d'un matériau brut fait d'un alliage à base de fer, mince, plat et durci par procédé thermique et déformées en partie par déformation plastique qu'on appelle roulement autour de la zone du demi-rayon, puis les surfaces latérales à coller ensemble sont pourvues d'une rugosité dont les valeurs, conformément à la norme EN ISO 4287, EN ISO 4288 (DIN 4762), ont une hauteur de profil maximale de R_{z} (R_{y}) = 3,0 à 7,0 µm et un indice de rugosité moyenne arithmétique de Rₐ = 0,30 à 0,75 µm, que les surfaces latérales des feuilles de métal en forme de scie circulaire ainsi travaillées sont ensuite recouvertes de colle et sont soumises sous pression à un procédé de durcissement thermique à deux étapes, suite à quoi ont lieu un traitement de la surface extérieure latérale de la lame collée de scie circulaire ou lame principale, qui donne une rugosité de surface d'une hauteur de profil maximale R_{z} de 5 à 10 µm, et une liaison métallique des surfaces circonférentielles entre les fentes ou des dents avec les plaquettes de coupe ou les segments de diamant.

2. Procédé selon la revendication 1, **caractérisé par** l'application sur les surfaces latérales à coller et travaillées des feuilles de métal d'une couche de colle thermodurcissable d'une épaisseur allant de 0,03 à 0,06 mm, mesurée à partir de la ligne médiane (m) du profil de rugosité, disposées l'une sur l'autre de manière coïncidente et durcies au préalable dans une première étape de durcissement à une température allant de 50° C à 70° C et une pression de 1 à 3 kg/cm² pendant une durée de 10 à 16 minutes et amenées à température ambiante ainsi qu'éventuellement dressées, le durcissement complet de la colle ayant lieu ensuite à une température de 140 à 160° C.

3. Procédé selon la revendication 1 à 2, **caractérisé en ce que** le traitement des surfaces latérales a lieu par polissage par brosse ou par polissage arrondi.

4. Procédé selon l'une quelconque des revendications 1 à 3, **caractérisé en ce que** le prélèvement des feuilles de métal du matériau brut a lieu par découpage par fusion thermique, par exemple par découpage au laser, et **en ce que** les feuilles de métal sont soumises, avant leur transformation, à un traitement de revenu, par exemple dans une plage de température située entre 380° C et 480°C.

5. Procédé selon l'une quelconque des revendications 1 à 4, **caractérisé en ce que** la lame de scie circulaire et/ou la lame principale sont formées à partir d'un alliage composé de
| | | |
|---|---|---|
| 0,6 | à | 0,9 C |
| 0,15 | à | 0,7 Si |
| jusqu'à | | 1,0 Mn |
| | max. | 0,03 P |
| | max. | 0,03 S |
| 0,20 | à | 0,60 Cr |
en pourcentage de poids et le reste en fer et en éléments d'accompagnement, et que la liaison métallique des plaquettes de coupe ou des segments de diamant avec la lame principale a lieu par brasage.

6. Procédé selon l'une quelconque des revendications 1 à 4, **caractérisé en ce que** la lame de scie circulaire et la lame principale sont formées à partir d'un alliage constitué de
| | | |
|---|---|---|
| 0,18 | à | 0,35 C |
| jusqu'à | | 0,50 Si |
| jusqu'à | | 1,40 Mn |
| | max. | 0,03 P |
| | max. | 0,03 S |
| 0,30 | à | 1,55 Cr |
| | à | 0,40 Mo |
en pourcentage de poids et le reste en fer et en éléments d'accompagnement et que la liaison métallique des plaquettes de coupe ou des segments de diamant avec la lame principale a lieu par soudage, en particulier par soudage au laser.
